# EUROPÄISCHE PATENTANMELDUNG

(11) **EP 0 792 855 A2**
(43) Veröffentlichungstag der Anmeldung: **03.09.1997**
(21) Anmeldenummer: 97102409.6
(22) Anmeldetag: 14.02.1997
(51) Int. Cl.: C05F 17/00, C05F 17/02

(54) **Verfahren und Vorrichtung zur Verrottung von organischen Abfällen**

(30) Priorität: 27.02.1996 DE 19607305
(71) Anmelder: MESSER GRIESHEIM GMBH, D-60547 Frankfurt (DE)
(72) Erfinder: Böckler, Thomas, 47807 Krefeld (DE); Schmitz, Hans-Rudolf, 47807 Krefeld (DE); Beutler, Hans-Josef, 47669 Wachtendonk (DE)

(57) **Zusammenfassung**

Bei der Verrottung von organischen Abfällen in Komposthaufen ist es bekannt, in den Komposthaufen Luft einzutragen, um eine vollständigere und schnellere Kompostierung zu erreichen. Dabei ist eine Geruchsbelästigung nicht immer zu vermeiden; auch können Kapazitätsengpässe auftreten.
Nach dem erfindungsgemäßen Verfahren wird in den Komposthaufen mit Sauerstoff angereicherte Luft eingetragen, die vorzugsweise 25 bis 30 % Sauerstoff enthält. Geruchsbelästigung sowie ein ständiges Wenden zur Belüftung des Komposthaufens entfällt. Die biologische Aktivität ist deutlich gesteigert. Kapazitätsengpässe können vermieden werden.

## Beschreibung

Die Erfindung betrifft ein Verfahren zur Verrottung von organischen Abfällen nach dem Oberbegriff des Anspruchs 1 sowie eine für die Durchführung des Verfahrens geeignete Vorrichtung.

Nach dem Stand der Technik ist es bekannt, Komposthaufen, welche sich im wesentlichen aus organischen Abfällen, wie Grünschnitt und Biomüll zusammensetzen, mit Luft zu beschicken um eine gleichmäßige Kompostierung über das gesamte Volumen des gegenüber der Umgebung offenen Komposthaufens zu gewährleisten. Dies geschieht, indem die Umgebungsluft mittels einem Gebläse über eine Leitung oder Rinne in den Komposthaufen eingebracht wird. Der Gasaustritt der Leitung befindet sich dabei vorzugsweise in der Mitte des Komposthaufens oder - je nach Größe des Komposthaufens - an mehreren Austrittsstellen, die sich von der Leitung abzweigen und gleichmäßig über das zu versorgende Volumen verteilt sind.
Aus der DE-PS 41 07 340 ist ein Verfahren bekannt, bei dem ein geschlossener Kompostierbehälter mit Sauerstoff versorgt wird. Hierbei wird das zur Kompostierung eingesetzte Gas, dem der Sauerstoff zugeführt wird, im Kreislauf geführt. Entstandenes CO₂ wird dabei in einer zwischengeschalteten Stufe abgetrennt. Bei dem eingangs genannten Verfahren ist die Rottezeit verhältnismäßig lang, so daß bei Anfall von großen Mengen an zu verrottendem Material Kapazitätengpässe entstehen. Geruchsemissionen können nur mit erheblichem technischem Aufwand unterbunden werden. Die Rottetemperatur ist oftmals inhomogen und erfordert häufiges Umsetzen des Materials.
Das Verfahren der DE-PS 41 07 340 ist nur in geschlossenen Behältern durchzuführen und erfordert einen großen technischen Aufwand.

Der Erfindung liegt daher die Aufgabe zugrunde ein Verfahren und eine Vorrichtung zu schaffen, mit denen die Rottezeit in gegenüber der Umgebung nicht abgeschlossenen Kompostierungshaufen verkürzt werden kann ohne großen technischen Aufwand zu betreiben. Geruchsemission soll dabei verhindert werden.

Ausgehend vom Oberbegriff des Anspruchs 1 ist die Aufgabe gelöst mit den im kennzeichnenden Teil des Anspruchs 1 angegebenen Merkmalen.

Mit dem erfindungsgemäßen Verfahren und der Vorrichtung ist es nunmehr möglich, Komposthaufen mit geringerem Zeitaufwand einer Verrottung zu unterwerfen. Gleichzeitig stellt sich eine für die Kompostierung günstigere Temperatur sowie ein gleichmäßigeres Temperaturprofil in dem Komposthaufen ein und Geruchsbildung wird verhindert.

Vorteilhafte Weiterbildungen des erfindungsgemäßen Verfahrens sind in den Unteransprüchen angegeben.

Im folgenden soll die Erfindung an einem Beispiel erläutert werden.

Ein Gebläse, welches Umgebungsluft ansaugt, ist an eine Leitung angeschlossen, in welche reines Sauerstoffgas aus einem Sauerstoffvorratsbehälter eingespeist wird. Als Sauerstoffquelle kann auch eine on-site Anlage zur Erzeugung von O₂ aus Luft zum Einsatz kommen. Hierfür kommen beispielsweise Membrantrennanlagen oder Druckwechsel-Absorptionsanlagen in Betracht. Die Leitung wird in das Innere eines Komposthaufens geführt in das die mit Sauerstoff angereicherte Luft eingetragen wird. Durch eine Meßsonde, die im Komposthaufen positioniert ist, wird der aktuelle Sauerstoffgehalt im Komposthaufen gemessen und die Einspeisung an Sauerstoff in die eingeleitete Luft durch eine Steuerung reguliert beziehungsweise einem Sollwert angepaßt. Es ist bei einem größeren Komposthaufen möglich, die Leitung in verzweigter Form einzuführen oder mehrere Leitungen gleichzeitig zu verlegen, so daß ein möglichst gleichmäßiger Eintrag von mit Sauerstoff angereicherter Luft ermöglicht wird. Grundsätzlich kann jede beliebige Sauerstoffkonzentration in dem in den Komposthaufen eingetragenen Volumenstrom eingestellt werden. Überraschenderweise führt aber schon eine Konzentration von Sauerstoff in dem Gasgemisch von 25 % zu einer Verdopplung der Rottegeschwindigkeit obwohl bei dieser Zusammensetzung nur 4% mehr Sauerstoff mehr in dem Gas sind als in der nach dem Stand der Technik eingeleiteten Luft. Aus sicherheitstechnischen Gründen ist es weiterhin vorteilhaft, wenn die Sauerstoffkonzentration 30% nicht überschreitet, wenn der Komposthaufen gegenüber der Umgebung nicht abgeschlossen ist. Ein Regelung der Sauerstoffzufuhr durch Messung der Sauerstoffkonzentration im Innenraum des Komposthaufens wird sich daher vorzugsweise an einem solchen Konzentrationsbereich orientieren.

Mit dem erfindungsgemäßen Verfahren und der Vorrichtung ist es nunmehr möglich, organische Abfälle in offenen Komposthaufen zu verrotten ohne dabei Geruchsemissionen zu erzeugen. Die Kapazität von Rottebetrieben läßt sich erhöhen, so daß weniger Spitzenlastprobleme entstehen. Das Temperourprofil im Komposthaufen verläuft gleichmäßiger und es wird eine für die Verrottung bessere Temperatur erreicht. Da die Versorgung des zu verrottenden Materials mit Sauerstoff immer gewährleistet ist, muß der Rottehaufen nicht gewendet werden um eine gleichmäßige Versorgung des organischen Materials zu gewährleisten. Die biologische Aktivität wird deutlich gesteigert.

## Patentansprüche

1. Verfahren zur Verrottung von organischen Abfällen in einem gegenüber der Umgebung wenigstens teilweise offenen Komposthaufen, bei dem zur Belüftung in den Komposthhaufen ein Sauerstoffhaltiges Gas eingeleitet wird,
dadurch gekennzeichnet,
daß das sauerstoffhaltige Gas eine höhere Konzentration an Sauerstoff aufweist als Luft.

2. Verfahren nach Anspruch 1,
dadurch gekennzeichnet,
daß das sauerstoffhaltige Gas eine Konzentration von 25 bis 30 % an Sauerstoff hat.

3. Verfahren nach Anspruch 1 oder 2,
dadurch gekennzeichnet,
daß das sauerstoffhaltige Gas über mindestens eine Leitung in das Innere des Komposthaufens eingetragen wird.

4. Verfahren nach einem der Ansprüche 1 bis 3,
dadurch gekennzeichnet,
daß die Sauerstoffkonzentration in dem Komposthaufen gemessen und in Abhängigkeit vom Meßwert die eingeleitete Menge an Sauerstoff in den Komposthaufen einem Sollwert angepaßt wird.

5. Vorrichtung zur Durchführung des Verfahrens nach Anspruch 1 mit einem Gebläse und mindestens einer an das Gebläse angeschlossenen Leitung,
dadurch gekennzeichnet,
daß der Vorrichtung eine Sauerstoffquelle und Mittel zum Eintrag des Sauerstoffes in die Leitung zugeordnet sind.

6. Vorrichtung nach Anspruch 5,
dadurch gekennzeichnet,
daß die Sauerstoffquelle eine on-site- Anlage ist.

7. Vorrichtung nach Anspruch 5 oder 6,
dadurch gekennzeichnet,
daß der Vorrichtung eine Meßsonde zugeordnet ist, die die Sauerstoffkonzentration im Komposthaufen mißt.

8. Vorrichtung nach Anspruch 7,
dadurch gekennzeichnet,
daß an die Meßsonde eine Steuerung angeschlossen ist, die die Sauerstoffzufuhr in den Komposthaufen in Abhängigkeit von der im Komposthaufen gemessenen Sauerstoffkonzentration reguliert.
